# EUROPEAN PATENT SPECIFICATION

(11) **EP 4 238 633 B1**
(45) Date of publication and mention of the grant of the patent: **02.12.2026**
(21) Application number: 23153681.4
(22) Date of filing: 27.01.2023
(51) Int. Cl.: B01D 53/86, B01D 46/71, B01D 46/682, B01D 53/96, B01J 37/02, B05B 3/18, B05B 7/04, B05B 7/14, B05B 12/14, B05B 13/04

(54) **FILTER REGENERATING APPARATUS AND METHOD OF DENITRIFICATION FACILITY**
REGENERIERUNGSVORRICHTUNG UND -VERFAHREN FÜR FILTER EINER DENITRIFIKATIONSANLAGE
APPAREIL ET PROCÉDÉ DE RÉGÉNÉRATION DE FILTRE D'INSTALLATION DE DÉNITRIFICATION

(30) Priority: 09.02.2022 KR 20220017128
(43) Date of publication of application: 06.09.2023
(73) Proprietor: Hong, Sung Ho, Seoul 06624 (KR)
(72) Inventor: Hong, Sung Ho, Seoul 06624 (KR)
(74) Representative: Habermann, Hruschka & Schnabel

(56) References cited:
- WO-A1-01/91918
- WO-A1-2014/196696
- CN-A- 108 686 511
- KR-A- 20160 146 631
- KR-B1- 101 873 788

## Description

### BACKGROUND OF THE DISCLOSURE

### Field of disclosure

The present disclosure relates to a denitrification facility and a filter regenerating method, and more particularly, to a filter regenerating apparatus and method of a denitrification facility for regenerating a denitrification catalyst of a power generation facility.

### Related Art

In general, thermal power plants are operated on the basis of coal or oil. In recent years, since regulations on environmental pollution have been stricter and tighter, environmental facilities to reduce the emission of pollutants are researched, developed, and distributed.

Regarding those environment facilities, Korean Patent No. 10-1918663 (titled Power Generation System and registered on November 8, 2018) has been published. This related art includes a denitrification facility for denitrifying exhaust gas by injecting a reducing agent into exhaust gas exhausted from a power plant.

The denitrification facility includes a denitrification catalyst, that is, a filter, and performs denitrification of the exhaust gas. As the denitrification catalyst is poisoned by ammonium sulfate, dust, and metal salt during a repeated denitrification process, replacement or regeneration of the denitrification catalyst is required. However, in many cases, the denitrification catalyst is manually cleaned, which leads to a problem in that the cleaning of the denitrification catalyst is not uniformly performed. In addition, when the denitrification catalyst is poisoned by sodium, potassium, phosphorus pentoxide, etc., it is difficult to regenerate the denitrification catalyst and there are problems such as environmental pollution and increased landfill costs due to disposal of the catalyst.

A denitrification facility having a filter and a filter regenerating apparatus according to the preamble of claim 1 is disclosed, for example, in KR 101 873 788 B1 and WO 01/91918 A1, respectively. A corresponding filter regenerating method of a denitrification facility is e.g. known from WO 2014/196696 A1.

### SUMMARY OF THE DISCLOSURE

The present disclosure provides a denitrification facility with filter and a filter regenerating apparatus having the features of claim 1 and a filter regenerating method of a denitrification facility having the features of claim 12, i.e. in other words a catalyst regenerating apparatus and method of a denitrification facility to regenerate a filter while automatically cleaning and coating the filter installed in the denitrification facility without need of separating the filter.

In an aspect, a filter regenerating apparatus of a denitrification facility includes: a body module disposed above a filter installed in the denitrification facility, and capable of reciprocating in a first direction; a nozzle support module supported by the body module, and capable of reciprocating in a second direction crossing the first direction; a coating material spray nozzle detachable from the nozzle support module, and capable of spraying a coating material toward the filter disposed below; and a power control module configured to control operations of the body module and the nozzle support module so that the coating material spray nozzle is transferred along the filter in the first and second directions.

The filter regenerating apparatus of the denitrification facility further includes a cleaning material spray nozzle mounted on the nozzle support module to spray dry ice toward the filter disposed below before the coating material is sprayed, and the coating material spray nozzle and the cleaning material spray nozzle are detachable from the nozzle support module together or selectively.

The filter regenerating apparatus of the denitrification facility may further include a cleaning material supply module providing dry ice and compressed air to the cleaning material spray nozzle, and the cleaning material supply module may adjust pressure of injection of dry ice pellets and the compressed air to 4 to 8 bar.

Particles of the dry ice may permeate into pores of the filter and then sublimate so that poisonous substances of the filter are discharged to an outside from the pores of the filter.

The dry ice sprayed toward the filter may instantly form a vacuum between inner walls of the filter so that the poisonous substance is discharged from the filter.

The filter regenerating apparatus of the denitrification facility may further include a coating material supply module providing the coating material to the coating material spray nozzle, and the coating material may comprise a vanadium pentoxide aqueous solution.

After the coating spray nozzle sprays the coating material toward the filter, a boiler connected to the denitrification facility may be operated to heat the filter mounted on the denitrification facility.

The filter regenerating apparatus of the denitrification facility may further include a rail module installed on a top of the filter and forming a path along which the body module is transferred in the first direction.

The body module may include: a body frame; a transfer roller disposed between the body frame and the rail module so as to allow the body frame to move along the rail module; a support frame supported by the body frame and forming a path along which the nozzle support module is transferred in the second direction; a first power source providing power to the transfer roller so as to transfer the body module in the first direction; and a second power source providing power to the nozzle support module so that the nozzle support module is transferred in the second direction along the support frame.

The rail module may include: first and second rail frames spaced apart from each other and installed along frames of the denitrification facility in the first direction; and a connection frame connecting the first and second rail frames.

The power control module may control the nozzle support module to be transferred in the first and second directions according to a preset rule.

The power control module may control the nozzle support module to move over an entire upper area of the filter.

In another aspect, a filter regenerating method of a denitrification facility includes : installing a filter regenerating apparatus above a filter installed in the denitrification facility; cleaning the filter by moving a cleaning material spray nozzle connected to the filter regenerating apparatus and spraying dry ice toward the filter; and coating the filter by moving the coating material spray nozzle connected to the filter regenerating apparatus and spraying the coating material toward the filter that has been cleaned.

In the cleaning and the coating, the cleaning material spray nozzle and the coating material spray nozzle may be transferred in a first direction and in a second direction crossing the first direction.

The filter regeneration method of the denitrification facility may further include, after the coating, heating the filter mounted on the denitrification facility by operating a boiler connected to the denitrification facility.

In a catalyst regenerating apparatus and method of a denitrification facility according to the present disclosure, it is possible to automatically transfer a spray nozzle to perform cleaning and coating of a filter, thereby improving regeneration efficiency and reducing a regeneration time.

In addition, in the catalyst regenerating apparatus and method of the denitrification facility according to the present disclosure, it is possible not only to remove clogging of the filter based on dry ice, but also to coat a catalytically active material and regenerate the filter, thereby prolonging the life of the filter, solving environmental problems caused by waste landfill, and resolving the increase in landfill cost.

Technical effects of the present disclosure as described above are not limited to the effects mentioned above, and other technical effects not mentioned will be clearly understood by those skilled in the art from the description below.

### BRIEF DESCRIPTION OF THE DRAWINGS

FIG. 1 is a perspective view showing a filter regenerating apparatus of a denitrification facility and the denitrification facility according to the present disclosure.
FIG. 2 is a perspective view showing a filter regenerating apparatus of a denitrification facility according to the present disclosure.
FIG. 3 is a conceptual diagram showing a filter regenerating apparatus of a denitrification facility according to the present disclosure.
FIG. 4 is a flowchart showing the operation of a filter regenerating apparatus of a denitrification facility according to the present disclosure.
FIG. 5 is a conceptual diagram showing a filter cleaning principle of a filter regenerating apparatus of a denitrification facility according to the present disclosure.

### DESCRIPTION OF EXEMPLARY EMBODIMENTS

Hereinafter, embodiments of the present disclosure will be described in detail with reference to the accompanying drawings. The embodiments of the present disclosure, however, may be changed into several other forms, and the scope of the present disclosure should not be construed as being limited to the following embodiments. The embodiments of the present disclosure are intended to more comprehensively explain the present disclosure to those skilled in the art. Accordingly, the shapes of elements or the like shown in figures are exaggerated to emphasize distinct explanation, and elements indicated by like reference numerals in the figures mean like elements.

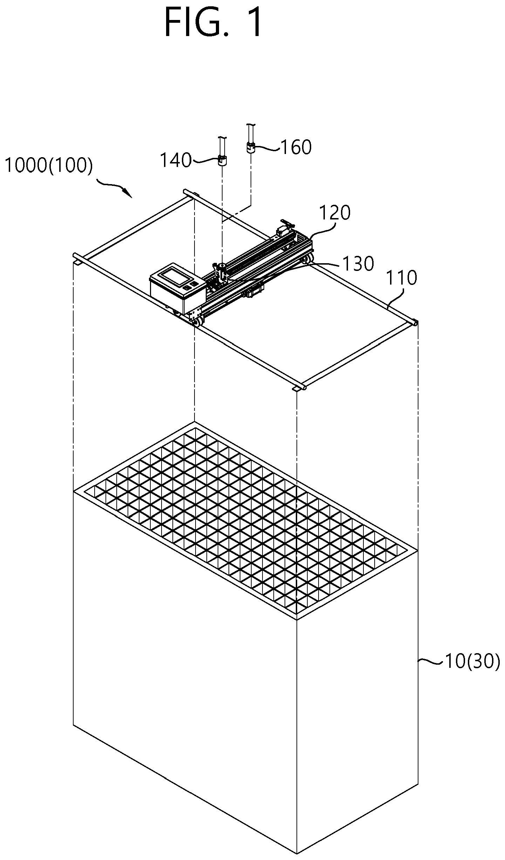

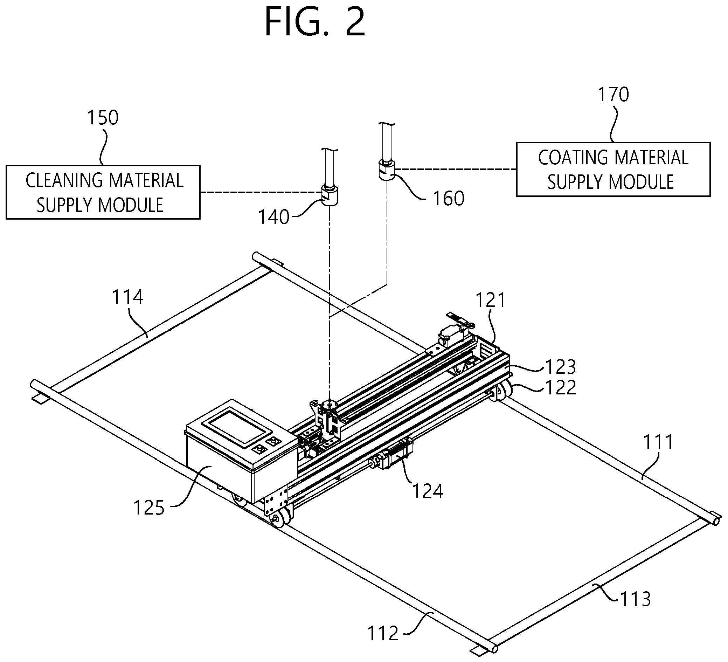

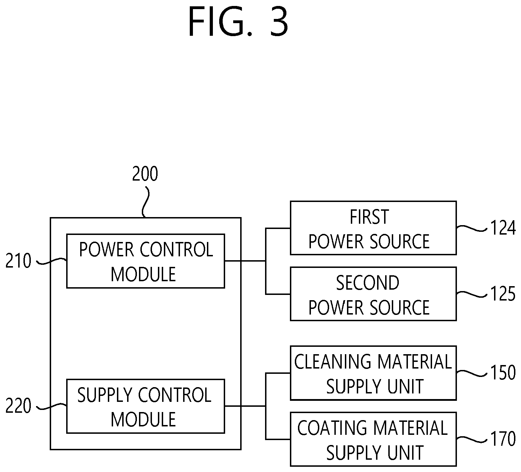

FIG. 1 is a perspective view showing a filter regenerating apparatus of a denitrification facility and the denitrification facility according to the present disclosure, and FIG. 2 is a perspective view showing a filter regenerating apparatus of a denitrification facility and the denitrification facility according to the present disclosure. FIG. 3 is a conceptual diagram showing a filter regenerating apparatus of a denitrification facility according to the present disclosure.

As shown in FIGS. 1 to 3, a filter regenerating apparatus 1000 of the denitrification facility according to the present disclosure (hereinafter referred to as a filter regenerating apparatus) may include a regenerating unit 100 and a control unit 200 to regenerate a filter 30 installed in a denitrification facility 10.

In this case, a cross section of the filter 30 in a height direction may be in a honeycomb structure, but this is merely an example for explanation of the present disclosure, and the cross section of the filter 30 regenerated by the filter regenerating apparatus 1000 may have any of various shapes, such as a plate structure or a corrugated structure.

First, the regenerating unit 100 may include a rail module 110, a body module 120, a nozzle support module 130, a cleaning material spray nozzle 140, a cleaning material supply module 150, a coating material spray nozzle 160, and a coating material supply module 170.

The rail module 110 may be disposed above the filter 30 to form a path along which the cleaning material spray nozzle 140 or the coating material spray nozzle 160 is transferred above the filter 30. For example, the rail module 110 may be disposed at a frame of the denitrification facility 10 that supports the filter 30.

The rail module 110 may include a first rail frame 111, a second rail frame 112, a first connection frame 113, and a second connection frame 114.

In this case, the first rail frame 111 and the second rail frame 112 may be spaced apart from each other at a predetermined interval and may be fixed to frames of the denitrification facility 10.

In addition, the first connection frame 113 may connect one ends of the first rail frame 111 and the second rail frame 112, and the second connection frame 114 may connect the other ends of the first rail frame 111 and the other end the second rail frame 112.

Also, the body module 120 may be connected to the rail module 110 so as to be transferred along the rail module 110. The body module 120 may reciprocate in a first direction along the first rail frame 111 and the second rail frame 112, and the nozzle support module 130 supported by one area of the body module 120 may reciprocate in a second direction crossing the first direction.

For example, the body module 120 may include a body frame 121, a transfer roller 122, a support frame 123, a first power source 124, and a second power source 125.

The body frame 121 may be provided in plurality to configure the body module 120.

In addition, the transfer roller 122 may be disposed below the body frame 121. The transfer roller 122 may be provided in plural so that the body module 120 can reciprocally slide in the first direction along the first rail frame 111 and the second rail frame 112.

In addition, the support frame 123 may be supported by the body frame 121 and may be arranged to extend in the second direction. The support frame 123 may form a path along which the nozzle support module 130 is transferred in the second direction.

In addition, the first power source 124 may be supported by the body frame 121 and provide power to a plurality of transfer rollers 122. The first power source 124 may provide power to the plurality of transfer rollers 122 in accordance with a signal provided from the outside, so that the plurality of transfer rollers 122 can reciprocate along the first rail frame 111 and the second rail frame 112. In this case, the first power source 124 may include a motor, but aspects of the present disclosure are not limited thereto.

In addition, the second power source 125 may be supported by the body frame 121 and provide power to the nozzle support module 130. The second power source 125 may provide power to the nozzle support module 130 in accordance with a signal provided from the outside, so that the nozzle support module 130 can reciprocate along the support frame 123 in the second direction. In this case, the second power source 125 may provide power to the nozzle support module 130 based on a motor, a rack-and-pinion structure, a conveyor structure, and an actuator, but the type of the second power source 125 is not limited.

In addition, the nozzle support module 130 may be detachable from the cleaning material spray nozzle 140 or the coating material spray nozzle 160 together or selectively. The nozzle support module 130 may control the cleaning material spray nozzle 140 or the coating material spray nozzle 160 to reciprocate in the second direction along the support frame 123 by the second power source 125.

In addition, the cleaning material spray nozzle 140 may allow dry ice pellets to be sprayed toward the filter 30. The cleaning material spray nozzle 140 may be connected to the cleaning material supply module 150 through a connection tube. The cleaning material spray nozzle 140 may spray the dry ice pellets, provided from the cleaning material supply module 150, toward the filter 30, so that the filter 30 can be cleaned.

The cleaning material supply module 150 may supply the dry ice pellets to the cleaning material spray nozzle 140 based on compressed air.

In addition, the coating material spray nozzle 160 may spray a vanadium pentoxide aqueous solution, which is a catalytically active material, toward the filter 30 that has been cleaned by the dry ice pellets. For example, when poisoning of the filter 30 is not severe, the denitrification efficiency may be recovered only with the dry ice pellets. However, when the poisoning is severe, the vanadium pentoxide aqueous solution may be sprayed to coat the filter 30, so that the filter 30 can be restored like a new product. The coating material spray nozzle 160 may be connected to the coating material supply module 170 through the connection tube. Accordingly, the coating material spray nozzle 160 may spray the catalytically active material, provided from the coating material supply module 170, toward the filter 30 so that the filter 30 can be finally regenerated.

In addition, the coating material supply module 170 may allow the previously stored vanadium pentoxide aqueous solution to be supplied to the coating material spray nozzle 160 through the connection tube.

Meanwhile, the control unit 200 may control the overall operation of the reproducing unit 100. For example, the control unit 200 may include a power control module 210 and a supply control module 220.

The power control module 210 may be supported by the body module 120. The power control module 210 may control the first power source 124 so that the nozzle support module 130 can reciprocate in the first direction, and the power control module 210 may control the second power source 125 so that the nozzle support module 130 can reciprocate in the second direction.

In addition, the supply control module 220 may be connected to the cleaning material supply module 150 and the coating material supply module 170. The supply control module 220 may control the cleaning material supply module 150 and the coating material supply module 170, so that compressed air and dry ice pellets can be supplied to the cleaning material spray nozzle 140 and a catalytically active material can be supplied to the coating material spray nozzle 160.

Meanwhile, hereinafter, the operation of a filter regenerating apparatus of a denitrification facility according to the present disclosure will be described with reference to the accompanying drawings. However, detailed descriptions of the above-described components will be omitted, and like reference numerals will be given for like elements.

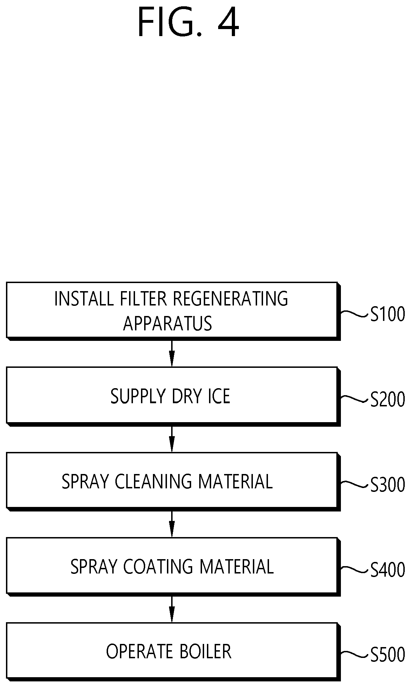

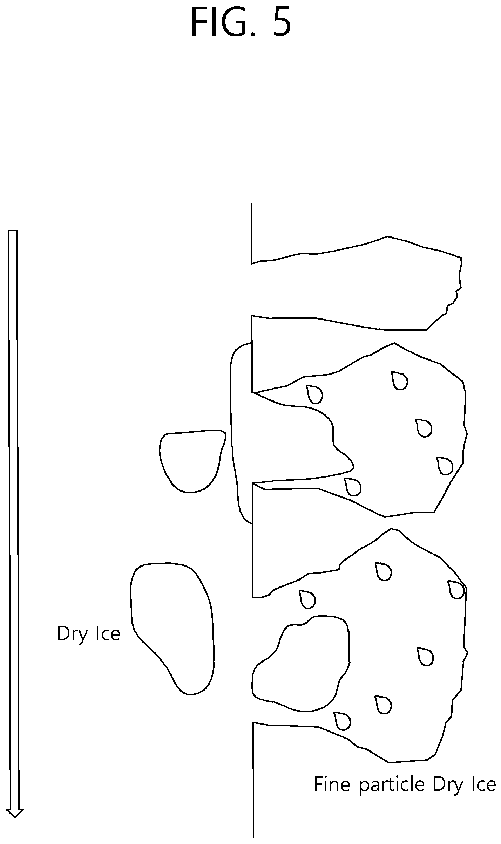

FIG. 4 is a flow chart showing the operation of a filter regenerating apparatus of a denitrification facility according to the present disclosure, and FIG. 5 is a conceptual diagram showing the filter cleaning principle of a filter regenerating apparatus of a denitrification facility according to the present disclosure.

As shown in FIGS. 4 and 5, a filter regenerating apparatus 1000 according to the present disclosure may be transferred by an operator to an environment where a denitrification facility 10 is located to regenerate a filter 30 of the denitrification facility 10. Then, the operator may disassemble the denitrification facility 10 so that the top of the filter 30 is exposed.

Thereafter, the operator may install a rail module 110 on a frame of the denitrification facility 10 in operation S100. In this case, a first rail frame 111 and a second rail frame 112 may be installed to correspond to a frame interval of the denitrification facility 10. For example, the first rail frame 111 and the second rail frame 112 may be installed at an interval of 80 to 120 cm. In addition, the operator may connect one ends of the first rail frame 111 and the second rail frame 112 to a first connection frame 113 and the other ends of the first rail frame 111 and the second rail frame 112 to a second connection frame 114, so that the rail module 110 can be maintained in a solid state.

Meanwhile, when the installation of the rail module 110 is completed, the operator may install a body module 120 to the rail module 110. In this case, the operator may install the body module 120 so as to allow a transfer roller 122 to move along the first rail frame 111 and the second rail frame 112.

Then, the operator may fasten a cleaning material spray nozzle 140 to a nozzle support module 130 so as to fix the cleaning material spray nozzle 140 to the nozzle support module 130. Then, the operator may control the supply control module 220 so as to supply dry ice pellets and compressed air from the cleaning material supply module 150 to the cleaning material spray nozzle 140 through a connection tube in operation S200. In addition, the operator may control the power control module 210 so as to allow the regenerating unit 100 to move the cleaning material spray nozzle 140 in a first direction and a second direction, so that cleaning of the filter 30 is performed in operation S300.

For example, the regenerating unit 100 may control the cleaning material spray nozzle 140 to be transferred in the first direction in accordance with a signal provided from the outside. In this case, a transfer interval of the cleaning material spray nozzle 140 may be se to a preset distance, but it is also possible to adjust the transfer interval of the cleaning material spray nozzle 140 according to an operator's manipulation.

At this point, as the cleaning material spray nozzle 140 is transferred by a set distance in the first direction, the dry ice pellets and compressed air may be sprayed from the cleaning material spray nozzle 140 toward honeycomb cells of the filter 30, so that the corresponding honeycomb cells can be cleaned. In this case, the pressure of injection of the dry ice pellets and compressed air may be 4 to 8 bar, but aspects of the present disclosure are not limited thereto. However, when the compressed air is sprayed at a pressure below a set level, poisonous substances may not be effectively removed, and when the compressed air is sprayed at a pressure above the set level, the filter 30 may be damaged.

In addition, as the dry ice pellets and compressed air are sprayed toward the honeycomb cells, poisonous substances in pores of the filter 30 may be crushed and removed by kinetic energy of a collision with the dry ice pellets. In this case, dry ice particles may permeate into the honeycomb cells and then sublimate (expanding 500 to 800 times in volume), and the poisonous substances may be discharged from the pores to the outside. That is, the poisonous substances in the pores may be discharged to the outside by instant vacuum formation of the dry ice particles passing quickly between the inner walls of the honeycomb cells, and the honeycomb cells may be regenerated.

Then, when the cleaning material spray nozzle 140 completes the regeneration of the honeycomb cells, the regenerating unit 100 may control the cleaning material spray nozzle 140 to be transferred by a set distance in the second direction. That is, the regenerating unit 100 may control the cleaning material spray nozzle 140 to be transferred to a position above honeycomb cells adjacent in the second direction, and the cleaning material spray nozzle 140 may spray dry ice pellets and compressed air toward the adjacent honeycomb cells to perform cleaning of the adjacent honeycomb cells.

Thereafter, when the cleaning material spray nozzles 140 complete cleaning of one row of honeycomb cells arranged in the second direction, the regenerating unit 100 may transfer the cleaning material spray nozzles 140 in the first direction by a set distance and perform regeneration of another row of honeycomb cells arranged in the second direction.

Meanwhile, when the cleaning of the filter 30 is completed, the operator may separate the cleaning material spray nozzle 140 from the nozzle support module 130 and fastens the coating material spray nozzle 160 so that the coating material spray nozzle 160 can be fixed to the nozzle support module 130.

Then, the operator controls the supply control module 220 so that the catalytically active material is provided from the coating material supply module 170 to the coating material spray nozzle 160 through the connection tube. Also, the operator may control the power control module 210 so that the regenerating unit 100 transfers the coating material spray nozzle 160 in the first and second directions to perform a coating process on the filter 30 in operation S400.

For example, the regenerating unit 100 may control the coating material spray nozzle 160 to be transferred in a first direction in accordance with a signal provided from the outside. In this case, the transfer interval of the coating material spray nozzle 160 may be transferred by a preset distance, but it is also possible to adjust the transfer interval of the coating material spray nozzle 160 according to an operator's manipulation.

In this case, as the coating material spray nozzle 160 is transferred in the first direction by a set distance, a catalytically active material may be sprayed from the coating material spray nozzle 160 toward honeycomb cells of the filter, so that the corresponding honeycomb cells can be coated.

Then, when the coating material spray nozzle 160 completes coating of the corresponding honeycomb cells, the regenerating unit 100 may control the coating material spray nozzle 160 to be transferred in the second direction by a set distance. That is, the regenerating unit 100 may control the coating material spray nozzle 160 to be transferred to a position above honeycomb cells adjacent in the second direction, and the coating material spray nozzle 160 may spray the catalytically active material to the adjacent honeycomb cells so as to perform coating of the adjacent honeycomb cells.

Then, when the coating material spray nozzles 160 complete the coating of one row of honeycomb cells arranged in the second direction, the regenerating unit 100 may move the coating material spray nozzles 160 a set distance in the first direction and perform coating of another row of honeycomb cells arranged in the second direction.

When regeneration of the filter 30 is finally completed, the operator may terminate the operation of the regenerating unit 100 and separate the filter regenerating apparatus 1000. Then, the operator may operate a boiler (not shown) connected to the denitrification facility 10 in operation S500.

In general, during a coating process in the regeneration of the filter 30 separated from the denitrification facility 10, a separate drying and sintering process may be required. However, since the regenerating unit 100 according to the present disclosure performs the regeneration with the filter 30 installed in the denitrification facility 10, a separate drying and sintering process is not required. Instead, drying and sintering of the filter 30 may be performed by operating the boiler of the denitrification facility 10. That is, since drying and sintering are performed using waste heat of exhaust gas discharged from the boiler, a separate drying and sintering process is not required.

As described above, in a catalyst regenerating apparatus and method of a denitrification facility according to the present disclosure, it is possible to automatically transfer a spray nozzle to perform filter cleaning and coating, thereby improving regeneration efficiency and reducing a regeneration time.

In addition, in the catalyst regenerating apparatus and method of the denitrification facility according to the present disclosure, it is possible not only to remove clogging of the filter based on dry ice, but also to coat the filter with the catalytically active material and regenerate the filter, thereby prolonging the life of the filter, solving environmental problems caused by waste landfill, and resolving the increase in landfill cost.

The above-described embodiments of the present disclosure shown in the drawings should not be construed as limiting the technical idea of the present disclosure. It will be understood by those of ordinary skill in the art that various changes in form and detail may be made therein without departing from the scope of the inventive concept as defined by the following claims. The exemplary embodiments should be considered in a descriptive sense only and not for purposes of limitation.

## Claims

1. Denitrification facility (10) having a filter (30) and a filter regenerating apparatus (1000), the apparatus comprising:
a body module (120) disposed above the filter (30) installed in the denitrification facility (10), and capable of reciprocating in a first direction;
a nozzle support module (130) supported by the body module (120), and capable of reciprocating in a second direction crossing the first direction;
a coating material spray nozzle (160) detachable from the nozzle support module (130), and capable of spraying a coating material toward the filter (30) disposed below; and
a power control module (210) configured to control operations of the body module (120) and the nozzle support module (130) so that the coating material spray nozzle (160) is transferred along the filter (30) in the first and second directions;
**characterized by**
a cleaning material spray nozzle (140) mounted on the nozzle support module (130) to spray dry ice toward the filter (30) disposed below before the coating material is sprayed, wherein the coating material spray nozzle (160) and the cleaning material spray nozzle (140) are detachable from the nozzle support module (130) together or selectively.

2. Denitrification facility (10) of claim 1, the filter regenerating apparatus (1000) further comprising:
a cleaning material supply module (150) providing dry ice and compressed air to the cleaning material spray nozzle (140),
wherein the cleaning material supply module (150) adjusts pressure of injection of dry ice pellets and the compressed air to 4 to 8 bar.

3. Denitrification facility (10) of claim 1, wherein particles of the dry ice permeate into pores of the filter (30) and then sublimate so that poisonous substances of the filter (30) are discharged to an outside from the pores of the filter (30).

4. Denitrification facility (10) of claim 3, wherein the dry ice sprayed toward the filter (30) instantly forms a vacuum between inner walls of the filter (30) so that the poisonous substance is discharged from the filter (30).

5. Denitrification facility (10) of claim 1, the filter regenerating apparatus (1000) further comprising:
a coating material supply module (170) providing the coating material to the coating material spray nozzle (160), wherein the coating material comprises a vanadium pentoxide aqueous solution.

6. Denitrification facility (10) of claim 1, wherein after the coating material spray nozzle (160) sprays the coating material toward the filter (30), a boiler connected to the denitrification facility (10) is operated to heat the filter (30) mounted on the denitrification facility (10).

7. Denitrification facility (10) of claim 1, the filter regenerating apparatus (1000) further comprising:
a rail module (110) installed on a top of the filter (30) and forming a path along which the body module (120) is transferred in the first direction.

8. Denitrification facility (10) of claim 7, wherein the body module (120) comprises:
a body frame (121);
a transfer roller (122) disposed between the body frame (121) and the rail module (110) so as to allow the body frame (121) to move along the rail module (110);
a support frame (123) supported by the body frame (121) and forming a path along which the nozzle support module (130) is transferred in the second direction;
a first power source (124) providing power to the transfer roller (122) so as to transfer the body module (121) in the first direction; and
a second power source (125) providing power to the nozzle support module (130) so that the nozzle support module (130) is transferred in the second direction along the support frame.

9. Denitrification facility (10) of claim 7, wherein the rail module (110) comprises:
first and second rail frames (111,112) spaced apart from each other and installed along frames of the denitrification facility (10) in the first direction; and
a connection frame (113,114) connecting the first and second rail frames (111,112).

10. Denitrification facility (10) of claim 1, wherein a power control module (210) controls the nozzle support module (130) to be transferred in the first and second directions according to a preset rule.

11. Denitrification facility (10) of claim 10, wherein the power control module (210) controls the nozzle support module (130) to move over an entire upper area of the filter (30).

12. A filter regenerating method of a denitrification facility (10), the method comprising:
installing (S100) a filter regenerating apparatus (1000) above a filter (30) installed in the denitrification facility (10);
cleaning the filter (30) by moving a cleaning material spray nozzle (140) connected to the filter regenerating apparatus (1000) and spraying (S300) dry ice toward the filter (30); and
coating the filter (30) by moving a coating material spray nozzle (160) connected to the filter regenerating apparatus (1000) and spraying (S400) the coating material toward the filter (30) that has been cleaned.

13. The filter regenerating method of claim 12, wherein in the cleaning and the coating, the cleaning material spray nozzle (140) and the coating material spray nozzle (160) are transferred in a first direction and in a second direction crossing the first direction.

14. The filter regenerating method of claim 12, further comprising:
after the coating, heating the filter (30) mounted on the denitrification facility (10) by operating (S500) a boiler connected to the denitrification facility (10).

## Patentansprüche

1. Denitrifikationsanlage (10) mit einem Filter (30) und einer Filterregenerationsvorrichtung (1000), wobei die Vorrichtung aufweist:
ein Gehäusemodul (120), das oberhalb des in der Denitrifikationsanlage (10) installierten Filters (30) angeordnet ist und in einer ersten Richtung hin- und herbewegt werden kann;
ein Düsenhaltermodul (130), das von dem Gehäusemodul (120) getragen wird und in einer zweiten Richtung, die die erste Richtung kreuzt, hin- und herbewegt werden kann;
eine Beschichtungsmaterial-Sprühdüse (160), die vom Düsenhaltermodul (130) abnehmbar ist und in der Lage ist, ein Beschichtungsmaterial in Richtung des darunter angeordneten Filters (30) zu versprühen; und
ein Leistungssteuermodul (210), das so konfiguriert ist, dass es den Betrieb des Gehäusemoduls (120) und des Düsenhaltermoduls (130) so steuert, dass die Beschichtungsmaterial-Sprühdüse (160) entlang des Filters (30) in der ersten und zweiten Richtung bewegt wird;
**gekennzeichnet durch**
einer Reinigungsmaterial-Sprühdüse (140), die an dem Düsenhaltermodul (130) angebracht ist, um Trockeneis in Richtung des darunter angeordneten Filters (30) zu sprühen, bevor das Beschichtungsmaterial versprüht wird, wobei die Beschichtungsmaterial-Sprühdüse (160) und die Reinigungsmaterial-Sprühdüse (140) gemeinsam oder wahlweise vom Düsenhaltermodul (130) abnehmbar sind.

2. Denitrifikationsanlage (10) nach Anspruch 1, bei der die Filterregenerationsvorrichtung (1000) des Weiteren aufweist:
ein Reinigungsmaterial-Zuführmodul (150), das der Reinigungsmaterial-Sprühdüse (140) Trockeneis und Druckluft zuführt,
wobei das Reinigungsmaterial-Zuführmodul (150) den Einspritzdruck der Trockeneispellets und der Druckluft auf 4 bis 8 bar einstellt.

3. Denitrifikationsanlage (10) nach Anspruch 1, bei der Partikel des Trockeneises in die Poren des Filters (30) eindringen und anschließend sublimieren, so dass giftige Substanzen des Filters (30) aus den Poren des Filters (30) nach außen abgeleitet werden.

4. Denitrifikationsanlage (10) nach Anspruch 3, bei der das auf den Filter (30) gesprühte Trockeneis augenblicklich einen Unterdruck zwischen den Innenwänden des Filters (30) erzeugt, so dass die giftigen Substanzen aus dem Filter (30) abgeleitet werden.

5. Denitrifikationsanlage (10) nach Anspruch 1, bei der die Filterregenerationsvorrichtung (1000) des Weiteren aufweist:
ein Beschichtungsmaterial-Zuführmodul (170), das das Beschichtungsmaterial der Beschichtungsmaterial-Sprühdüse (160) zuführt,
wobei das Beschichtungsmaterial eine wässrige Vanadiumpentoxid-Lösung aufweist.

6. Denitrifikationsanlage (10) nach Anspruch 1, bei der, nachdem die Beschichtungsmaterial-Sprühdüse (160) das Beschichtungsmaterial in Richtung des Filters (30) versprüht hat, ein mit der Denitrifikationsanlage (10) verbundener Kessel in Betrieb genommen wird, um den an der Denitrifikationsanlage (10) angebrachten Filter (30) zu erwärmen.

7. Denitrifikationsanlage (10) nach Anspruch 1, bei der die Filterregenerationsvorrichtung (1000) des Weiteren aufweist:
ein Schienenmodul (110), das auf einer Oberseite des Filters (30) angebracht ist und eine Bahn bildet, entlang der das Gehäusemodul (120) in der ersten Richtung transportiert wird.

8. Denitrifikationsanlage (10) nach Anspruch 7, bei der das Gehäusemodul (120) aufweist:
einen Gehäuserahmen (121);
eine Transportrolle (122), die zwischen dem Gehäuserahmen (121) und dem Schienenmodul (110) angeordnet ist, um eine Bewegung des Gehäuserahmens (121) entlang des Schienenmoduls (110) zu ermöglichen;
einen Stützrahmen (123), der vom Gehäuserahmen (121) getragen wird und eine Bahn bildet, entlang der das Düsenhaltermodul (130) in der zweiten Richtung transportiert wird;
eine erste Antriebsquelle (124), die die Transportrolle (122) antreibt, um das Gehäusemodul (121) in der ersten Richtung zu transportieren; und
eine zweite Antriebsquelle (125), die das Düsenhaltermodul (130) antreibt, so dass das Düsenhaltermodul (130) in der zweiten Richtung entlang des Stützrahmens bewegt wird.

9. Denitrifikationsanlage (10) nach Anspruch 7, bei der das Schienenmodul (110) aufweist:
einen ersten und einen zweiten Schienenrahmen (111, 112), die voneinander beabstandet sind und entlang der Rahmen der Denitrifikationsanlage (10) in der ersten Richtung angebracht sind; und
einen Verbindungsrahmen (113, 114), der den ersten und den zweiten Schienenrahmen (111, 112) verbindet.

10. Denitrifikationsanlage (10) nach Anspruch 1, bei der ein Leistungssteuermodul (210) das Düsenhaltermodul (130) so steuert, dass es gemäß einer voreingestellten Regel in der ersten und der zweiten Richtung verfahren wird.

11. Denitrifikationsanlage (10) nach Anspruch 10, bei der das Leistungssteuermodul (210) das Düsenhaltermodul (130) so steuert, dass es sich über den gesamten oberen Bereich des Filters (30) bewegt.

12. Verfahren zur Filterregeneration einer Denitrifikationsanlage (10), wobei das Verfahren aufweist:
Installieren (S100) einer Filterregenerationsvorrichtung (1000) über einem in der Denitrifikationsanlage (10) installierten Filter (30);
Reinigen des Filters (30) durch Bewegen einer mit der Filterregenerationsvorrichtung (1000) verbundenen Sprühdüse (140) für Reinigungsmaterial und Aufsprühen (S300) von Trockeneis auf den Filter (30); und
Beschichten des Filters (30) durch Bewegen einer mit der Filterregenerationsvorrichtung (1000) verbundenen Sprühdüse (160) für Beschichtungsmaterial und Aufsprühen (S400) des Beschichtungsmaterials auf den gereinigten Filter (30).

13. Verfahren zur Filterregeneration nach Anspruch 12, bei dem bei der Reinigung und der Beschichtung die Sprühdüse (140) für das Reinigungsmaterial und die Sprühdüse (160) für das Beschichtungsmaterial in einer ersten Richtung und in einer zweiten Richtung, die die erste Richtung kreuzt, bewegt werden.

14. Verfahren zur Filterregeneration nach Anspruch 12, das des Weiteren aufweist:
nach dem Beschichten, Erwärmen des an der Denitrifikationsanlage (10) montierten Filters (30) durch Betreiben (S500) eines mit der Denitrifikationsanlage (10) verbundenen Kessels.

## Revendications

1. Installation de dénitrification (10) comprenant un filtre (30) et un appareil de régénération du filtre (1000), l'appareil comprenant:
un module de boîtier (120) qui est disposé au-dessus du filtre (30) installé dans l'installation de dénitrification (10) et qui peut être déplacé dans une premier direction;
un module de support de buses (130) porté par le module de boîtier (120) et pouvant effectuer un mouvement de va-et-vient dans une deuxième direction croisant la première direction;
une buse de pulvérisation de matériau de revêtement (160), amovible du module de support de buses (130) et capable de pulvériser un matériau de revêtement en direction du filtre (30) disposé en dessous; et
un module de commande de puissance (210) configuré pour commander le fonctionnement du module de boîtier (120) et du module de support de buses (130) de manière à déplacer la buse de pulvérisation de matériau de revêtement (160) le long du filtre (30) dans les première et deuxième directions;
**caractérisé par**
une buse de pulvérisation de matériau de nettoyage (140) montée sur le module de support de buses (130) pour pulvériser de la glace carbonique en direction du filtre (30) situé en dessous avant la pulvérisation du matériau de revêtement, la buse de pulvérisation de matériau de revêtement (160) et la buse de pulvérisation de matériau de nettoyage (140) pouvant être retirées ensemble ou séparément du module de support de buses (130).

2. Installation de dénitrification (10) selon la revendication 1, dans laquelle l'appareil de régénération du filtre (1000) comprend en outre:
un module d'alimentation en matériau de nettoyage (150) qui alimente la buse de pulvérisation de matériau de nettoyage (140) en glace carbonique et en air comprimé,
le module d'alimentation en matériau de nettoyage (150) réglant la pression d'injection des granulés de glace carbonique et de l'air comprimé entre 4 et 8 bars.

3. Installation de dénitrification (10) selon la revendication 1, dans laquelle des particules de glace carbonique pénètrent dans les pores du filtre (30) puis se subliment, de sorte que les substances toxiques présentes dans le filtre (30) sont évacuées vers l'extérieur à partir des pores du filtre (30).

4. Installation de dénitrification (10) selon la revendication 3, dans laquelle la glace carbonique pulvérisée sur le filtre (30) génère instantanément une dépression entre les parois intérieures du filtre (30), de sorte que les substances toxiques sont évacuées du filtre (30).

5. Installation de dénitrification (10) selon la revendication 1, dans laquelle l'appareil de régénération du filtre (1000) comprend en outre:
un module d'alimentation en matériau de revêtement (170) qui alimente la buse de pulvérisation de matériau de revêtement (160) en matériau de revêtement,
le matériau de revêtement comprenant une solution aqueuse de pentoxyde de vanadium.

6. Installation de dénitrification (10) selon la revendication 1, dans laquelle, après que la buse de pulvérisation de matériau de revêtement (160) a pulvérisé le matériau de revêtement en direction du filtre (30), une chaudière reliée à l'installation de dénitrification (10) est mise en service afin de chauffer le filtre (30) monté sur l'installation de dénitrification (10).

7. Installation de dénitrification (10) selon la revendication 1, dans laquelle l'appareil de régénération du filtre (1000) comprend en outre:
un module de rails (110) monté sur une face supérieure du filtre (30) et formant une voie le long de laquelle le module de boîtier (120) est transporté dans la première direction.

8. Installation de dénitrification (10) selon la revendication 7, dans laquelle le module de boîtier (120) comprend:
un châssis de boîtier (121);
un rouleau de transport (122) disposé entre le châssis de boîtier (121) et le module de rails (110) afin de permettre le déplacement du châssis de boîtier (121) le long du module de rails (110);
un châssis de support (123) porté par le châssis de boîtier (121) et formant une voie le long de laquelle le module de support de buses (130) est transporté dans la deuxième direction;
une première source d'entraînement (124) qui entraîne le rouleau de transport (122) afin de transporter le module de châssis (121) dans la première direction; et
une deuxième source d'entraînement (125) qui entraîne le module de support de buses (130) de telle sorte que celui-ci se déplace dans la deuxième direction le long du châssis de support.

9. Installation de dénitrification (10) selon la revendication 7, dans laquelle le module de rails (110) comprend:
un premier et un deuxième châssis de rails (111, 112), qui sont espacés l'un de l'autre et montés le long des châssis de l'installation de dénitrification (10) dans la première direction; et
un châssis de liaison (113, 114) reliant les premier et deuxième châssis de rails (111, 112).

10. Installation de dénitrification (10) selon la revendication 1, dans laquelle un module de commande de puissance (210) commande le module de support de buses (130) de manière à ce qu'il se déplace dans la première et la deuxième direction conformément à une règle prédéfinie.

11. Installation de dénitrification (10) selon la revendication 10, dans laquelle le module de commande de puissance (210) commande le module de support de buses (130) de telle sorte qu'il se déplace sur toute la partie supérieure du filtre (30).

12. Procédé de régénération du filtre d'une installation de dénitrification (10), le procédé comprenant:
installer (S100) d'un appareil de régénération du filtre (1000) au-dessus d'un filtre (30) installé dans l'installation de dénitrification (10);
nettoyer du filtre (30) en déplaçant une buse de pulvérisation de matériau de nettoyage (140), reliée d'appareil de régénération du filtre (1000), et pulvériser (S300) de la glace carbonique sur le filtre (30); et
revêtir du filtre (30) en déplaçant une buse de pulvérisation de matériau de revêtement (160), reliée d'appareil de régénération du filtre (1000), et pulvériser (S400) le matériau de revêtement sur le filtre (30) nettoyé.

13. Procédé de régénération de filtre selon la revendication 12, dans lequel, lors du nettoyage et du revêtement, la buse de pulvérisation de matériau de nettoyage (140) et la buse de pulvérisation de matériau de revêtement (160) sont déplacées dans une première direction et dans une deuxième direction qui croise la première direction.

14. Procédé de régénération de filtre selon la revendication 12, qui comprend en outre:
après le revêtement, le chauffage du filtre (30) monté sur l'installation de dénitrification (10) par le fonctionnement (S500) d'une chaudière reliée à l'installation de dénitrification (10).
